# EUROPEAN PATENT SPECIFICATION

(11) **EP 1 668 253 B1**
(45) Date of publication and mention of the grant of the patent: **07.05.2008**
(21) Application number: 04768529.2
(22) Date of filing: 16.09.2004
(51) Int. Cl.: F04D 19/04, F04B 37/14

(54) **DETECTION OF CONTAMINANTS WITHIN FLUID PUMPED BY A VACUUM PUMP**
ERFASSUNG VON VERUNREINIGUNGEN IN EINEM DURCH EINE VAKUUMPUMPE GEPUMPTEN FLUID
DETECTION DE CONTAMINANTS DANS UN FLUIDE POMPE PAR UNE POMPE A VIDE

(30) Priority: 26.09.2003 GB 0322609; 26.04.2004 GB 0409275
(43) Date of publication of application: 14.06.2006
(73) Proprietor: Edwards Limited, Crawley, West Sussex RH10 9LW (GB)
(72) Inventor: BREWSTER, Barrie, Dudley, West Sussex RH15 9TT (GB)
(74) Representative: Clark, Charles Robert
(86) International application number: PCT/GB2004/003983
(87) International publication number: WO 2005/031169

(56) References cited:
- EP-A- 0 245 843
- WO-A-00/28384
- US-A- 4 255 088
- US-A- 4 919 599
- US-A- 5 823 747

## Description

This invention relates to the detection of contaminants within fluid pumped by a vacuum pump and, in particular, by a molecular vacuum pump.

Many manufacturing processes and experiments are highly sensitive to contamination, and for this reason are conducted within a vacuum, or a partial vacuum environment. In particular certain fabrication processes in the manufacture of semiconductor devices, such as etching, deposition, and ion implantation require vacuum conditions to ensure the chemical purity of the process, as well as to obtain the correct physical conditions (molecular mean free path, etc) suitable for creating a reactive plasma or providing a uniform process. More recently, Extreme Ultra Violet (EUV) projection lithography processes have been devised, in which the reflective surfaces of optical components are highly sensitive to damage in the presence of water or hydrocarbon contamination.

In order to ensure the environmental conditions for such sensitive vacuum processes, it is highly advantageous to have a partial pressure sensing device capable of distinguishing contaminant gas species from the other gases intentionally introduced into the vacuum chamber. These other gases may be reactive gases, or inert gases required to create the necessary pressure and flow conditions.

A number of methods exist in the prior art for species selective gas pressure measurement.

### (1). Residual Gas Analyser (RGA)

In the prior art, partial pressure analysers are used to measure the constituents of gas in a vacuum chamber. Such RGAs are typically Quadrupole Mass Spectrometers (QMS), which are costly, and generally only capable of measuring at low levels of total pressure. In this method a spectrum is produced, corresponding to a partial pressure of ions present as a function of their mass-to-charge ratio (m/z). In general, gas molecules present in the system are cracked in the ion source, yielding smaller ions which appear in the spectrum at generally lower m/z values.

### (2). Sampling Residual Gas Analyser

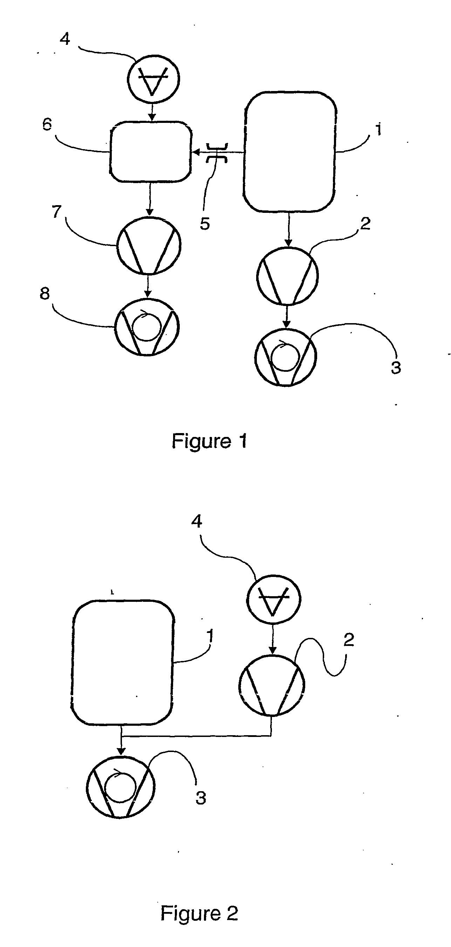

Figure 1 illustrates an arrangement where the total pressures exceed the levels allowed by the pressure sensing device. A chamber 1 is pumped by pump 2, typically a turbo-molecular pump 2, and backing pump 3, typically a positive displacement pump. An RGA 4 is connected to an auxiliary chamber 6, which is connected to chamber 1 via a flow-restricting device 5. The auxiliary chamber 6 is equipped with an additional molecular pump 7 and positive displacement pump 8, which allows the RGA 4 to operate at an acceptable level of total pressure. Such a system allows the measurement of gas species which are most abundant in the chamber (1), but is unable to measure gas species which have very low partial pressures; typically measurements are limited to relative levels of the order of 50 parts per billion. The additional pumping arrangement of molecular pump 7 and positive displacement pump 8 also leads to a very costly system.

### (3). Transient Residual Gas Analyser

In order to measure oil backstreaming from a pumping arrangement, it is known to connect an RGA to a vacuum chamber upstream of the pump arrangement. Once the system has reached ultimate pressure, the RGA is switched off, allowing the nearby surfaces of the chamber to cool and so acisorb oil vapours present in the chamber. When the RGA is again switched on, the accompanying rise in temperature causes rapid desorption of vapours, which are detected in the RGA.
This results in a highly amplified "spike" of detected vapour, which then decays as thermal equilibrium is re-established. This amplified response may be used to improve the sensitivity of the measuring system.

### (4). Contraflow Residual Gas Analyser

As illustrated in Figure 2, an alternative method (often applied in Helium Leak Detection) is to connect the RGA in a contraflow configuration. In this arrangement, the RGA 4 is connected to the inlet of a molecular pump 2. The outlet of the pump 2 is connected to a positive displacement pump 3, which is also connected to the chamber 1. Whilst the molecular pump 2 maintains the RGA 4 at a sufficiently iow total pressure, helium is aiiowed to flow backwards through the molecular pump 2, and so the arrangement relies on the fact that the compression ratio of the molecular pump 2 is low for certain gas species, particularly light gases such as helium.

This arrangement provides improvements in the relative sensitivity of the RGA for gases such as helium, but is unsuitable for other gases, such as water vapour or hydrocarbons. Because the sensitivity of the device for each gas species is dependent on the compression ratio of the molecular pump for that particular species, the system is unsuitable for use as a multi-gas analyser. The method is effective for helium because molecular pumps have a poor compression ratio for helium, whereas it is ineffective for most heavy hydrocarbon contaminants because molecular pumps exhibit high compression ratios for these heavy molecules. The high cost of the analyser and the additional pump 2 is also disadvantageous.

### (5). Pump-assisted leak detection

When helium leak detection is used on large vacuum systems having their own vacuum pumps, the speed of response may be improved by attaching a helium leak detector to the foreline of the vacuum pumps, rather than directly to the vacuum chamber. The speed of response in leak detection is related to the ratio S/V, where S is the pumping speed of the leak detection system, and V is the volume of the vacuum chamber. Most leak detectors have low pumping speeds, in the region of a few litres/second, and so for a large vacuum chamber, with correspondingly larger vacuum pumps, the effective pumping speed of the leak detector is greatly increased by connecting it in series with these large vacuum pumps. Whilst this method is highly advantageous for helium leak detection, it is not practical for the detection of hydrocarbon contamination in the chamber, because of the high concentration of hydrocarbon contamination usually present in the foreline (often caused by the backing pumps).

### (6). GC-MS inlet Concentrator

In Gas Chromatography Mass Spectroscopy (GC-MS), the gas to be analysed may be detected by a variety of techniques, including a quadrupole analyser, time-of-flight (TOF) and other methods. In order to increase the sensitivity of such methods, an "Inlet Concentrator" is sometimes used, otherwise known as a "Purge and Vent" device. These devices comprise a small chamber, filled with adsorbent material such as activated charcoal, whose temperature may be varied. The device is exposed to the gas to be analysed, and then rapidly heated, driving off all the accumulated gas in a short time. The increased concentration improves the sensitivity of the detecting device.

### (7). Temperature Programmed Desorption Spectroscopy (TPDS)

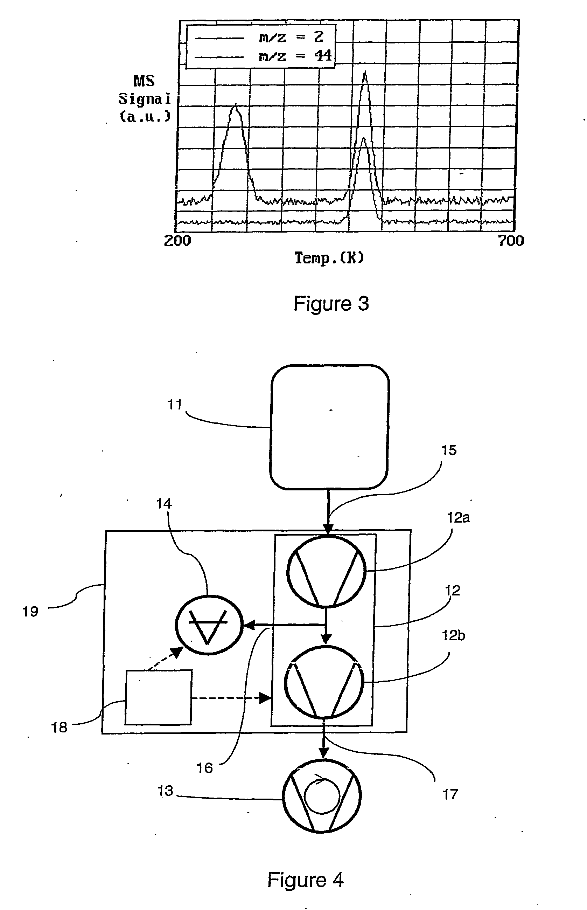

In this analytical method, the gas is adsorbed onto an adsorbate layer held at a low temperature, and then the temperature is increased at a steady controlled rate (typically a few K/s). The gases so driven off are then detected with a suitable detector, such as a Quadrupole Mass Spectrometer (QMS), although Time of Flight (TOF) spectrometry can also be used. This method provides a spectrum of gas pressure as a function of temperature, which may be interpreted to indicate the relative abundance of gases with different binding energies to the surface, so providing valuable information on the constituents of the gas. For example, in Figure 3, the QMS output is shown for formic acid adsorbed onto a copper substrate for atomic mass values m/z = 2 and 44. Th is shows only weakly-adsorbed hydrogen (m/z=2) desorbed at around 280K, and both Hydrogen and Carbon Dioxide (m/z=44) desorbed at around 470K.

### (8). Gas selective capacitative measuring device

An alternative solution is to use a gas selective measuring device, such as a capacitative sensor in which a dielectric material, often a thin-film polymer, changes properties in response to the presence of water vapour. Such devices have the disadvantage that they are only sensitive to a particular gas species (in this example water vapour), and also they generally have a lower absolute sensitivity. They are also susceptible to drift. However, because they are only sensitive to a particular gas species, they are capable of measuring at low relative partial pressures, where the species of interest is a small fraction of the other gases present. They have the further advantage of lower cost than residual gas analysers.

### (9). Quartz Crystal Microbalance (QCM)

These devices rely on measuring the mass of contamination adsorbed (condensed) onto the surface of the device. The device comprises a quartz crystal, excited by a high frequency electrical voltage, whose natural frequency is affected by the additional mass caused by the adsorbed material. These devices are species dependent, since they respond only to gases, which condense on their surface, and their ability to distinguish gases may be modified by coating their surface with suitable materials, or by operating the device at different temperatures, including cryogenic temperatures.

### (10). Surface Acoustic Wave (SAW) sensors

These devices are similar to QCMs, but rely on waves propagated on the surface of the device, rather than on waves travelling through its bulk. This greatly improves their sensitivity to small amounts of material adsorbed on their surface.

### (11). Metal-oxide conductance sensors

These devices use a thin layer of metal oxide, usually deposited by Chemical Vapour Deposition (CVD), to generate a sensing layer whose electrical conductivity is sensitive to adsorbed materials. Special fabrication techniques allow arrays of such thin film devices to be deposited onto a single substrate, each sensitive to a particular group of materials. Since these devices depend on oxidation, they are susceptible to drift in a vacuum environment, which is oxygen reducing.

### (12). Solid State Electrochemical Cell

These sensors comprise a solid electrolyte, between two electrodes, and rely on detecting currents carried by or voltages generated by oxygen anions. These are suitable for measuring hydrocarbon contamination, but have a detection limit which is higher than is required in many applications. They must also be operated at elevated temperatures in order to promote anion conduction. In some circumstances, the electrolyte allows diffusion of oxygen from the atmosphere into the vacuum system, which may itself become a source of process contamination.

These prior art methods (1) to (12) discussed above have various disadvantages which render them unsuitable for use as a method for quantitative measurement of partial pressures in a process application.

### (A). Cost

Prior art methods (1) to (7) generally rely on quadrupole mass analysers or similar costly detection devices. In most cases they also require auxiliary vacuum chambers with their own vacuum pumping equipment. The cost of such systems is often too great to be suitable for widespread use in many processes.

### (B). Interpretation

Quadrupole mass spectrometer data is complex to interpret, since large hydrocarbon molecules are cracked in the ion source, and interpretation requires a skilled operator to determine the parent chemical from the cracking pattern of lighter fragments. This makes it unsuitable for automated process control software.

### (C). Sensitivity

RGAs have difficulty in resolving small partial pressures against a background of other benign gas. In particular, it is difficult to detect water against a large background of argon, since double-ionised argon appears at 20 amu, and water at 18. Also, cracked hydrocarbons yield fragments C₃H₄⁺ (40 amu) and other fragments close in mass to 40 amu. These are also difficult to resolve in the presence of argon. Argon is frequently used in both semiconductor fabrication processes and EUV lithography tools. The lower cost sensors (8) to (11) do not suffer the same disadvantage of being affected by other gases, but generally have poor sensitivity.

### (D). Speed of response

The speed of response of the sampling residual gas analyser of prior art method (2) is poor, because, with reference back to Figure 1, the flow-restricting device 5 limits the rate at which the contaminant enters the auxiliary chamber 6.

### (E). Effect on the vacuum system

Prior art methods (6) and (7) involve temperature modulation, and are generally used for analytical purposes only to determine the relative concentrations of different species. They are generally considered unsuitable for quantitative measurement of partial pressures in a process application, because the fluctuations in temperature cause increased concentrations of contaminants, which adversely affect the process. In general the increase in sensitivity provided by such temperature modulation is governed by the "mark-space ratio" - the ratio of the time for which the surface is heated compared with the time for which it is kept cool.

### (F) Thermal Radiation and conduction

The RGA, and also the Solid State Electrochemical cell, must be operated at elevated temperatures, which transmit heat into the vacuum system by conduction or radiation. This may be very detrimental in lithography or metrology systems, which are very susceptible to temperature variations.

### (G) Charged Particles

The RGA typically generates energetic charged particles (ions or electrons) which may also be harmful to the process

### (H) Generated contamination

Some sensors also generate contamination. In the case of the Solid State electrochemical cell, diffusion of oxygen from the atmosphere may contaminate the process.

In summary, because contaminants may damage extremely expensive components, it is important that sensing device is very sensitive to low levels of contamination, and also has a fast response time so that adequate protection may be provided by process control software.

US 4,919,599 describes a pumping system for a leak detecting device, in which a test piece is connected to the inlet of a first turbomolecular pump, a gas detector is connected to the inlet of a second turbomolecular pump, and two molecular pumps each have an inlet connected to the outlet of a respective turbomolecular pump and a common outlet. EP 0 245 843 also describes a pumping system for a leak detecting device, in which a mass spectrometer is connected to the inlet of a molecular pump, a primary pump is connected to the outlet of the molecular pump, and a test piece is connected between the pumps.

In a first aspect, the present invention provides apparatus comprising a molecular vacuum pump having an inlet for receiving fluid, at least a first pumping stage and a second pumping stage, and an outlet for exhausting pumped fluid, and, in fluid communication with a location between the first and second stages, a sensor for receiving at least part of the fluid received by the pump, for detecting the presence of one or more contaminants therein, and for providing an output which is indicative of the partial pressure of said one or more contaminants within the fluid.

Thus, a sensor for detecting the presence of one or more contaminants is provided intermediate the pump inlet and the pump outlet. Accordingly, the partial pressure of the or each contaminant detected by the sensor is dominated by the flow of fluid received by the pump inlet, and so any backstreaming from a backing pump connected to the pump outlet has minimal affect on the partial pressure of the contaminants.

Sensitivity of the sensor can be increased by operating the sensor at a location where the contaminants within the received fluid have been compressed to a higher partial pressure by the first pumping stage of the pump. For instance, if the pumping speed of the first stage is Sₐ, and that of the second stage is S_{b}, then the contaminant partial pressure at the sensor, pₛ, is related to the partial pressure in the chamber, P_{c}, by the expression pₛ = P_{c} x Sₐ / S_{b}. Furthermore, the pumping effect of the second stage ensures that the sensor is unaffected by contaminants present in the foreline.

One of the stages may comprise a turbo-molecular stage, and/or one of the stages may comprise a molecular drag stage.

The sensor is preferably connected externally of the pump, in which case the pump comprises at said location a port, the apparatus comprising means for conveying fluid from said port towards the sensor. The apparatus preferably includes a housing for housing both the pump and the sensor. Control means may be provided for controlling both the pump and the sensor, the control means being preferably housed within the housing.

Preferably, in use the sensor is sensitive to contaminants (such as water vapour or hydrocarbons) in the fluid substantially independent of the pressure of non-contaminants in the fluid. The sensor is preferably sensitive to one or more selected contaminants only, which can render the signal output from the sensor easier to interpret and process using automated process control software.

The sensor may be a quartz crystal microbalance sensor, a surface acoustic wave sensor, or a capacitive-type sensor.

In one embodiment, the sensor is combined with an inlet concentrator to increase its sensitivity, or to improve its ability to discriminate between different gas species. The temperature modulation in the inlet concentrator may be substantially of a stepwise form, which can allow accumulation of contaminants while the surface is at a lower temperature, and to rapidly desorb these accumulated contaminants as the temperature is rapidly increased, thus creating a large transient concentration of contaminant, which may be easily sensed. Alternatively, the temperature modulation may be substantially of a saw-tooth form, which can allow contaminants to accumulate at the lower temperature, and desorb more slowly as the temperature is progressively increased, so that contaminants having lower binding energy are desorbed at the lower temperatures, and those with a higher binding energy at the higher temperatures, thus providing the ability to discriminate between contaminants of different binding energies. In another alternative, the temperature modulation may be substantially of a ramped-pulsed form.

The sensor may comprise a surface coated with material for absorbing one or more of the contaminants. Means for cooling the sensor to a temperature below ambient temperature may be provided, which can improve the ability of the sensor to absorb the contaminants of interest.

The apparatus preferably comprises a backing pump connected to the pump outlet for pumping fluid exhaust from the vacuum pump. The inlet may be in fluid communication with a vacuum chamber for receiving fluid therefrom. The contaminants may comprise at least one of water and a hydrocarbon.

The present invention further provides a method of detecting the presence of one or more contaminants within pumped fluid, comprising receiving fluid at an inlet of a vacuum pump comprising at least a first pumping stage and a second pumping stage, and an outlet for exhausting pumped fluid; and conveying, from a location between the first and second stages, at least part of the fluid received by the pump to a sensor for detecting the presence of one or more contaminants therein, and for providing an output which is indicative of the partial pressure of said one or more contaminants within the fluid.

Features relating to apparatus aspects of the invention are equally applicable to method aspects of the invention, and vice versa.

Preferred features of the present invention will now be described, by way of example only, with reference to the accompanying drawings, in which:
Figure 1 illustrates an arrangement of a sampling residual gas analyser;
Figure 2 illustrates an arrangement of a contraflow residual gas analyser;
Figure 3 is a graph showing the desorption spectrum of adsorbed formic acid;
Figure 4 illustrates an embodiment of the present invention; and Figures 5(a) to (c) illustrate various forms of temperature modulation which could be applied to the sensor of Figure 4.

With reference to Figure 4, a pump 12, such as a turbomolecular, molecular drag, or a compound turbomolecular/molecular drag pump has an inlet 15 connected to a vacuum chamber 11 by an inlet pipe or duct, and an outlet 17 connected to a second vacuum pump 13, such as a dry backing pump, by an outlet pipe or duct. The pump 12 has a first pumping section 12a, and a second pumping section 12b. The first pumping section 12a comprises at least one pumping stage, for example at least one turbomolecular stage, and the second pumping section 12b comprises at least one pumping stage, for example at least one molecular drag stage.

A partial pressure sensor, or measuring device, 14 is connected to a port of the molecular pump located intermediate the pump inlet 15 and the pump outlet 17 by a connecting pipe or duct 16. The partial pressure measuring device 14 may be a QCM (Quartz Crystal Microbalance), SAW (Surface Acoustic Wave) or a capacitive type (or similar gas-specific sensor), and may also use temperature modulation to increase its sensitivity, or to improve its ability to discriminate between different gas species. As illustrated in Figure 4, a controller 18 may be provided for controlling both the pump 12 and the partial pressure measuring device 14, with the pump 12, partial pressure measuring device 14 and controller 18 preferably being located in a common housing 19.

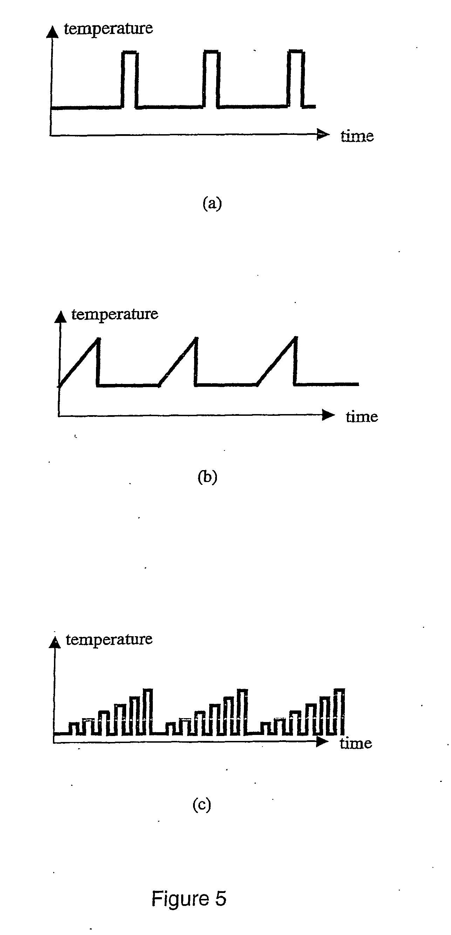

The temperature modulation may be substantially stepwise as in Figure 5(a), may be substantially of a sawtooth form as in Figure 5(b) or substantially of a ramped pulse form as in Figure 5(c). The effect of a stepwise modulation is to allow accumulation of contaminants while the surface is at a lower temperature, and to rapidly desorb these accumulated contaminants as the temperature is rapidly increased, thus creating a large transient concentration of contaminant, which may be easily sensed. The effect of the sawtooth modulation is to accumulate contaminants at the lower temperature, and then desorb them more slowly as the temperature is progressively increased, so that contaminants having lower binding energy are desorbed at the lower temperatures, and those with a higher binding energy at the higher temperatures, thus providing the ability to discriminate between contaminants of different binding energies.

In use, contaminant gases present in the chamber 11 are pumped by the pumping section 12a closest to the pump inlet, and compressed by that pumping section 12a to a higher pressure. By this means the pressure of the contaminant gas is increased to enable the contaminant to be more easily detected by the partial pressure measuring device 14.

It is also likely that contaminant gases are present in the vicinity of the outlet duct 17 of the pump 12, as a result of contaminants present in its bearing and lubrication system, or its motor driving system, or as a result of contaminants present in the second vacuum pump 14. Normally these contaminants do not affect the process chamber 11, because the pumping sections 12a, 12b provide an effective barrier against these contaminants. However it is important that the partial pressure measuring device 14 does not respond to increases in contaminants in the outlet duct. This is ensured by the pumping effect of the pumping section 12b adjacent to the outlet duct 17.

There are thus a number of distinct advantages of the present invention over the prior art methods (1) to (12) described above.

### (A). Cost

The invention overcomes the cost disadvantages of the Residual Gas Analyser, by using a lower cost gas-selective measuring device. No additional pumping means are required where the invention is applied to vacuum systems which already use a molecular pump. The absolute sensitivity of the gas-selective measuring device is improved by connecting the device at a point in the system where the total pressure is high.

### (B). Interpretation

The output from a sensor which is only sensitive to the contaminants of interest is intrinsically easier to interpret and process using automated process control software.

### (C). Sensitivity

The invention increases the sensitivity of the sensor by operating the sensor in a region where the contaminants present in the vacuum chamber have been compressed to a higher partial pressure. If the pumping speed of the pumping section 12a of the pump 12 is Sₐ, and that of the pumping section 12b of the pump 12 is S_{b}, then the contaminant partial pressure at the sensor, pₛ, is related to the partial pressure in the chamber, p_{c}, by the expression pₛ = P_{c} x Sₐ / S_{b}. Furthermore, the pumping effect of the pumping section 12a of the pump 12 ensures that the sensor is unaffected by contaminants present in the foreline.

### (D). Speed of response

The speed of response is improved by using the pumping speed of the first section 12a of the pump 12 to pump contaminants into the sensor.

### (E). Effect on the vacuum system

The pumping effect of the first section 12a of the molecular pump 12 prevents the process chamber 11 from being adversely affected by fluctuations in contaminant pressures caused by the temperature modulation. It also insulates the process chamber from contaminants generated by the sensor itself

### (F). Thermal Effect

Since the sensor is located remote from the process chamber, thermal effects resulting from radiation or conduction from either the sensor itself, or from temperature modulation in an inlet concentrator, are greatly reduced.

In summary, a vacuum pump has, in fluid communication with a location intermediate an inlet thereof for receiving fluid and an outlet thereof for exhausting pumped fluid, a sensor for receiving at least part of the fluid received by the pump and for sensing the presence of one or more contaminants therein.

## Claims

1. Apparatus comprising a molecular vacuum pump (12) having an inlet (15) for receiving fluid, at least a first pumping stage (12a) and a second pumping stage (12b), and an outlet (17) for exhausting pumped fluid, and, in fluid communication with a location between the first and second stages (12a, 12b), a sensor (14) for receiving at least part of the fluid received by the pump (12), **characterised in that** said sensor is detecting the presence of one or more contaminants therein, and is providing an output which is indicative of the partial pressure of said one or more contaminants within the fluid.

2. Apparatus according to Claim 1, wherein one of the stages (12a) comprises a turbo-molecular stage.

3. Apparatus according to Claim 1 or Claim 2, wherein one of the stages (12b) comprises a molecular drag stage.

4. Apparatus according to any preceding claim, wherein the pump (12) comprises at said location a port, the apparatus comprising means (16) for conveying fluid from said port towards the sensor (14).

5. Apparatus according to any preceding claim, comprising a housing (19) for housing the pump (12) and the sensor (14).

6. Apparatus according to any preceding claim, comprising means (18) for controlling both the pump (12) and the sensor (14).

7. Apparatus according to Claim 6, wherein the control means (18) is located within the housing (19).

8. Apparatus according to any preceding claim, wherein in use the sensor (14) is sensitive to contaminants in the fluid substantially independent of the pressure of non-contaminants in the fluid.

9. Apparatus according to any preceding claim, wherein the sensor (14) is a quartz crystal microbalance sensor.

10. Apparatus according to any of Claims 1 to 8, wherein the sensor (14) is a surface acoustic wave sensor.

11. Apparatus according to Claim 10, where the contaminant to be sensed is a hydrocarbon.

12. Apparatus according to any of Claims 1 to 8, wherein the sensor (14) is a solid state electrochemical cell.

13. Apparatus according to Claim 12, where the contaminant to be sensed is a hydrocarbon.

14. Apparatus according to any of Claims 1 to 8, wherein the sensor (14) is a gas-selective capacitative device.

15. Apparatus according to Claim 14, where the contaminant to be sensed is water vapour.

16. Apparatus according to any preceding claim, wherein the sensor (14) is provided with temperature modulation.

17. Apparatus according to Claim 16, wherein the temperature modulation is substantially of a stepwise form.

18. Apparatus according to Claim 16, wherein the temperature modulation is substantially of a saw-tooth form.

19. Apparatus according to Claim 16, wherein the temperature modulation is substantially of a ramped-pulsed form.

20. Apparatus according to any preceding claim, wherein the sensor (14) has a surface coated with material for absorbing one or more of the contaminants.

21. Apparatus according to any preceding claim, comprising means for cooling the sensor to a temperature below ambient temperature.

22. Apparatus according to any preceding claim, comprising a backing pump (13) connected to the outlet for pumping fluid exhaust from the pump (12).

23. Apparatus according to any preceding claim, wherein the inlet (15) is in fluid communication with a vacuum chamber (11) for receiving fluid therefrom.

24. Apparatus according to any preceding claim, wherein the contaminants comprise at least one of water and a hydrocarbon.

25. A method of detecting the presence of one or more contaminants within pumped fluid, comprising receiving fluid at an inlet (15) of a molecular vacuum pump (12) comprising at least a first pumping stage (12a) and a second pumping stage (12b), and an outlet (17) for exhausting pumped fluid; and conveying, from a location between the first and second stages (12a, 12b), at least part of the fluid received by the pump to a sensor (14) for detecting the presence of one or more contaminants therein, and for providing an output which is indicative of the partial pressure of said one or more contaminants within the fluid.

## Patentansprüche

1. Apparatur mit einer Molekularvakuumpumpe (12) mit einem Einlaß (15) zur Aufnahme von Strömungsmittel, mindestens einer ersten Pumpenstufe (12a) und einer zweiten Pumpenstufe (12b) und einem Auslaß (17) zum Ausstoßen von gepumpten Strömungsmittel, und mit einem in Strömungsverbindung mit einer Stelle zwischen der ersten und der zweiten Stufe (12a, 12b) stehenden Fühler (14) zur Aufnahme mindestens eines Teils des von der Pumpe (12) aufgenommenen Strömungsmittels, **dadurch gekennzeichnet, dass** der Fühler die Anwesenheit einer oder mehrerer Verunreinigungen darin erfasst und ein Ausgangssignal erzeugt, das den Partialdruck der einen oder mehreren Verunreinigung(en) innerhalb des Strömungsmittels anzeigt.

2. Apparatur nach Anspruch 1, wobei eine der Stufen (12a) eine Turbomolekularstufe ist.

3. Apparatur nach Anspruch 1 oder Anspruch 2, wobei eine der Stufen (12b) eine Molekularpumpenstufe ist.

4. Apparatur nach einem der vorhergehenden Ansprüche, wobei die Pumpe (12) an der genannten Stelle einen Anschluß aufweist, und die Apparatur Mittel (16) zum Fördern von Strömungsmittel von dem Anschluß zum Fühler (14) aufweist.

5. Apparatur nach einem der vorhergehenden Ansprüche, mit einem Gehäuse (19) zum Beherbergen der Pumpe (12) und des Fühlers (14).

6. Apparatur nach einem der vorhergehenden Ansprüche, mit Mitteln (18) zur Steuerung sowohl der Pumpe (12) als auch des Fühlers (14).

7. Apparatur nach Anspruch 6, wobei die Steuermittel (18) im Gehäuse (19) angeordnet sind.

8. Apparatur nach einem der vorhergehenden Ansprüche, wobei im Gebrauch der Fühler (14) für Verunreinigungen in den Strömungsmittel im wesentlichen unabhängig von dem Druck der Nicht-Verunreinigungen in dem Strömungsmittel ist.

9. Apparatur nach einem der vorhergehenden Ansprüche, wobei der Fühler (14) ein Quarzkristall-Mikrogleichgewichtsfühler ist.

10. Apparatur nach einem der Ansprüche 1 bis 8, wobei der Fühler (14) ein Oberflächen-Akustikwellenfühler ist.

11. Apparatur nach Anspruch 10, wobei die zu erfassende Verunreinigung ein Kohlenwasserstoff ist.

12. Apparatur nach einem der Ansprüche 1 bis 8, wobei der Fühler (14) eine elektrochemische Festkörperzelle ist.

13. Apparatur nach Anspruch 12, wobei die zu erfassende Verunreinigung ein Kohlenwasserstoff ist.

14. Apparatur nach einem der Ansprüche 1 bis 8, wobei der Fühler (14) eine Gas-selektive kapazitive Einrichtung ist.

15. Apparatur nach Anspruch 14, wobei die zu erfassende Verunreinigung Wasserdampf ist.

16. Apparatur nach einem der vorhergehenden Ansprüche, wobei der Fühler (14) mit Temperaturmodulation ausgestattet ist.

17. Apparatur nach Anspruch 16, wobei die Temperaturmodulation im wesentlichen stufenförmig ist.

18. Apparatur nach Anspruch 16, wobei die Temperaturmodulation im wesentlichen sägezahnförmig ist.

19. Apparatur nach Anspruch 16, wobei die Temperaturmodulation im wesentlichen rampenimpulsförmig ist.

20. Apparatur nach einem der vorhergehenden Ansprüche, wobei der Fühler (14) eine Oberfläche hat, die mit Material zum Absorbieren einer oder mehrerer der Verunreinigungen beschichtet ist.

21. Apparatur nach einem der vorhergehenden Ansprüche, mit Mitteln zum Kühlen des Fühlers auf eine Temperatur unterhalb Umgebungstemperatur.

22. Apparatur nach einem der vorhergehenden Ansprüche, mit einer Vorpumpe (13) die an den Auslaß zum Pumpen von Strömungsmittelausstoß aus der Pumpe (12) angeschlossen ist.

23. Apparatur nach einem der vorhergehenden Ansprüche, wobei der Einlaß (15) in Strömungsverbindung mit einer Vakuumkammer (11) steht, um Strömungsmittel von dort zu empfangen.

24. Apparatur nach einem der vorhergehenden Ansprüche, wobei die Verunreinigungen mindestens eine von Wasser und einem Kohlenwasserstoff umfassen.

25. Verfahren zum Nachweisen der Anwesenheit einer oder mehrerer Verunreinigungen in gepumpten Strömungsmittel, wobei an einem Einlaß (15) einer Molekularvakuumpumpe (12), die mindestens eine erste Pumpenstufe (12a) und eine zweite Pumpenstufe (12b) und einen Auslaß (17) zum Ausstoßen von gepumpten Strömungsmittel umfasst, aufgenommen wird und mindestens ein Teil des von der Pumpe aufgenommenen Strömungsmittels von einer Stelle zwischen der ersten und der zweiten Stufe (12a, 12b) zu einem Fühler (14) zum Nachweisen der Anwesenheit einer oder mehrerer Verunreinigungen darin und zum Erzeugen eines Ausgangssignals befördert wird, das den Partialdruck der einen oder mehreren Verunreinigung(en) innerhalb des Strömungsmittels anzeigt.

## Revendications

1. Dispositif comprenant une pompe à vide moléculaire (12) ayant une entrée (15) pour recevoir un fluide, au moins un premier étage de pompage (12a) et un deuxième étage de pompage (12b), et une sortie (17) pour l'évacuation du fluide pompé, et, en communication fluidique avec un emplacement situé entre le premier et le deuxième étages (12a, 12b), un détecteur (14) destiné à recevoir au moins une partie du fluide reçu par la pompe (12), ***caractérisé en ce que*** ledit détecteur détecte la présence d'un ou plusieurs contaminants dans celle-ci, et fournit une valeur de sortie qui est représentative de la pression partielle desdits un ou plusieurs contaminants dans le fluide.

2. Dispositif selon la revendication 1, dans lequel l'un des étages (12a) comprend un étage turbomoléculaire.

3. Dispositif selon la revendication 1 ou la revendication 2, dans lequel l'un des étages (12b) comprend un étage moléculaire mécanique.

4. Dispositif selon l'une quelconque des revendications précédentes, dans lequel la pompe (12) comprend un orifice de passage au niveau dudit emplacement, le dispositif comprenant des moyens (16) pour acheminer le fluide dudit orifice de passage vers le détecteur (14).

5. Dispositif selon l'une quelconque des revendications précédentes, comprenant un boîtier (19) destiné à recevoir la pompe (12) et le détecteur (14).

6. Dispositif selon l'une quelconque des revendications précédentes, comprenant des moyens (18) pour commander à la fois la pompe (12) et le détecteur (14).

7. Dispositif selon la revendication 6, dans lequel les moyens de commande (18) sont situés à l'intérieur du boîtier (19).

8. Dispositif selon l'une quelconque des revendications précédentes, dans lequel, à l'utilisation, le détecteur (14) est sensible aux contaminants présents dans le fluide de manière sensiblement indépendante de la pression des non contaminants dans le fluide.

9. Dispositif selon l'une quelconque des revendications précédentes, dans lequel le détecteur (14) est un détecteur à microbalance à cristal de quartz.

10. Dispositif selon l'une quelconque des revendications 1 à 8, dans lequel le détecteur (14) est un capteur d'ondes acoustiques de surface.

11. Dispositif selon la revendication 10, dans lequel le contaminant à détecter est un hydrocarbure.

12. Dispositif selon l'une quelconque des revendications 1 à 8, dans lequel le détecteur (14) est une cellule électrochimique à l'état solide.

13. Dispositif selon la revendication 12, dans lequel le contaminant à détecter est un hydrocarbure.

14. Dispositif selon l'une quelconque des revendications 1 à 8, dans lequel le détecteur (14) est un dispositif capacitif sélectif pour un gaz.

15. Dispositif selon la revendication 14, dans lequel le contaminant à détecter est la vapeur d'eau.

16. Dispositif selon l'une quelconque des revendications précédentes, dans lequel le détecteur (14) est équipé d'une modulation de la température.

17. Dispositif selon la revendication 16, dans lequel la modulation de température adopte essentiellement une forme par paliers.

18. Dispositif selon la revendication 16, dans lequel la modulation de température adopte essentiellement une forme en dents de scie.

19. Dispositif selon la revendication 16, dans lequel la modulation de température adopte essentiellement une forme pulsée en rampe.

20. Dispositif selon l'une quelconque des revendications précédentes, dans lequel le détecteur (14) possède une surface revêtue d'un matériau pour absorber l'un ou plusieurs des contaminants.

21. Dispositif selon l'une quelconque des revendications précédentes, comprenant des moyens pour refroidir le détecteur à une température inférieure à la température ambiante.

22. Dispositif selon l'une quelconque des revendications précédentes, comprenant une pompe auxiliaire (13) reliée à la sortie pour pomper le fluide évacué de la pompe (12).

23. Dispositif selon l'une quelconque des revendications précédentes, dans lequel l'entrée (15) est en communication fluidique avec une chambre à vide (11) afin de recevoir un fluide venant de celle-ci.

24. Dispositif selon l'une quelconque des revendications précédentes, dans lequel les contaminants comprennent au moins l'un d'entre l'eau et un hydrocarbure.

25. Procédé de détection de la présence d'un ou plusieurs contaminants dans un fluide pompé, comprenant la réception d'un fluide à une entrée (15) d'une pompe à vide moléculaire (12) comprenant au moins un premier étage de pompage (12a) et un deuxième étage de pompage (12b), et une sortie (17) pour l'évacuation du fluide pompé ; et l'acheminement, depuis un emplacement situé entre le premier et le deuxième étages (12a, 12b), d'au moins une partie du fluide reçu par la pompe jusqu'à un détecteur (14) destiné à détecter la présence d'un ou plusieurs contaminants dans celle-ci, et à fournir une valeur de sortie qui soit représentative de la pression partielle desdits un ou plusieurs contaminants dans le fluide.
